# EUROPÄISCHE PATENTANMELDUNG

(11) **EP 3 124 164 A1**
(43) Veröffentlichungstag der Anmeldung: **01.02.2017**
(21) Anmeldenummer: 15178442.8
(22) Anmeldetag: 27.07.2015
(51) Int. Cl.: B23K 26/06, B23K 26/08, B23K 26/38, B31B 50/59, B23K 26/364, B23K 26/142, B23K 26/382, B23K 103/16, B23K 103/00

(54) **VERFAHREN UND VORRICHTUNG ZUR BEARBEITUNG EINES SUBSTRATS**

(71) Anmelder: Mayr-Melnhof Karton AG, 1041 Wien (AT)
(72) Erfinder: THEIS, Uwe, 54317 Riveris (DE); VORENKAMP, Harman, 71549 Auenwald (DE)
(74) Vertreter: Hofstetter, Schurack & Partner

(57) **Zusammenfassung**

Die Erfindung betrifft ein Verfahren zur Bearbeitung eines Substrats (18), insbesondere eines Verpackungsmaterials aus Papier, Karton, Kunststoff oder dergleichen, oder eines Verbundstoffs umfassend das Substrat, mittels wenigstens einer ersten Lasereinrichtung (14), umfassend zumindest die folgenden Schritte: Steuern und Ausrichten von zumindest einem mittels der ersten Lasereinrichtung (14) erzeugten ersten Laserstrahls (16) zur Bearbeitung des Substrats (18) innerhalb mindestens eines Bearbeitungsbereichs (22); Erzeugen eines Luftstroms (28) in zumindest einem Teilbereich des Bearbeitungsbereichs (22) zum zumindest teilweisen Entfernen von durch die Laserstrahlbearbeitung erzeugten Konglomerate, Feststoffpartikel, Stäuben, Verdampfungs- und/oder Zersetzungsprodukten (24) aus zumindest diesem Teilbereich des Bearbeitungsbereichs (22); und Verdampfen und/oder Verbrennen von zumindest einem Teil der Konglomerate, Feststoffpartikel, Stäube, Verdampfungs- und/oder Zersetzungsprodukte (24) mittels des durch die erste Lasereinrichtung (14) erzeugten ersten Laser-strahls (16) und/oder mittels mindestens einem durch eine weitere, zweite Lasereinrichtung (30) erzeugten zweiten Laserstrahl (32). Die Erfindung betrifft weiterhin eine Vorrichtung (10) zur Bearbeitung eines Substrats (18), insbesondere eines Verpackungsmaterials aus Papier, Karton, Kunststoff oder dergleichen, oder eines Verbundstoffs umfassend das Substrat (18).

## Beschreibung

Die vorliegende Erfindung betrifft ein Verfahren und eine Vorrichtung zur Bearbeitung eines Substrats, insbesondere eines Verpackungsmaterials aus Papier, Karton, Kunststoff oder dergleichen, oder eines Verbundstoffs umfassend das Substrat, umfassend wenigstens eine erste Lasereinrichtung.

Bei der Herstellung von Faltschachteln als Primär- oder Sekundärverpackung werden üblicherweise Materialien wie Papier, Karton, Graukarton, Vollpappe oder Kunststoff als Packstoff verwendet. Zur Bearbeitung derartiger Substrate, insbesondere zur Herstellung von sogenannten Zuschnitten, ist es bekannt, Laser einzusetzen. Mittels Laserstrahlen erfolgt dabei ein Abtrag des Substrats in vordefinierten Bereichen. Mithilfe der Laserablation können die Materialien geschnitten, geritzt, gerillt oder perforiert werden.

Als nachteilig an den bekannten Verfahren und Vorrichtungen ist der Umstand anzusehen, dass bei einem Laserabtrag an dem Substrat, insbesondere bei Zellstoff oder Holzfasern enthaltenden Materialien wie Papier oder Karton, Konglomerate aus den feuchten Laserabgasen, den freigesetzten Feststoffpartikeln, Stäuben und/oder anderen Verdampfungs- und Zersetzungsprodukten entstehen. Diese verunreinigen insbesondere vorhandene Abluftsysteme, die die Abgase aus dem Bearbeitungsbereich entfernen sollen. Die Abluftsysteme können nur mit sehr hohem Aufwand gereinigt werden.

Aufgabe der vorliegenden Erfindung ist es, ein gattungsgemäßes Verfahren und eine gattungsgemäße Vorrichtung bereitzustellen, welche die Menge an sich im System befindlichen, durch einen Laserabtrag eines Substrats entstehenden Konglomeraten, Feststoffpartikeln, Stäuben und/oder anderen Verdampfungs- und Zersetzungsprodukten minimiert oder verringert.

Die Aufgaben werden erfindungsgemäß durch ein Verfahren mit den Merkmalen des Patentanspruchs 1 sowie durch eine Vorrichtung mit den Merkmalen des Patentanspruchs 8 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft ein Verfahren zur Bearbeitung eines Substrats, insbesondere eines Verpackungsmaterials aus Papier, Karton, Kunststoff oder dergleichen, oder eines Verbundstoffs umfassend das Substrat, mittels wenigstens einer ersten Lasereinrichtung, wobei das Verfahren zumindest die folgenden Schritte umfasst: Steuern und Ausrichten von zumindest einem mittels der ersten Lasereinrichtung erzeugten ersten Laserstrahls zur Bearbeitung des Substrats innerhalb mindestens eines Bearbeitungsbereichs; Erzeugen eines Luftstroms in zumindest einem Teilbereich des Bearbeitungsbereichs zum zumindest teilweisen Entfernen von durch die Laserstrahlbearbeitung erzeugten Konglomeraten, Feststoffpartikeln, Stäuben, Verdampfungs- und/oder Zersetzungsprodukten aus zumindest diesem Teilbereich des Bearbeitungsbereichs und Verdampfen und/oder Verbrennen von zumindest einem Teil der Konglomerate, Feststoffpartikel, Stäube, Verdampfungs- und/oder Zersetzungsprodukte mittels des durch die erste Lasereinrichtung erzeugten ersten Laserstrahls und/oder mittels mindestens einem durch eine weitere, zweite Lasereinrichtung erzeugten zweiten Laserstrahl. Durch das erfindungsgemäße Verdampfen und/oder Verbrennen von zumindest einem Teil der Konglomerate, Feststoffpartikel, Stäube, Verdampfungs- und/oder Zersetzungsprodukte wird deren Menge im System signifikant verringert. Dadurch werden vorteilhafterweise Verunreinigungen von vorhandenen Abluftsystemen zuverlässig verhindert beziehungsweise minimiert. Dabei kann die erste Lasereinrichtung sowohl zur Bearbeitung des Substrats als auch zum Verdampfen und/oder Verbrennen von zumindest einem Teil der Konglomerate, Feststoffpartikel, Stäube, Verdampfungs- und/oder Zersetzungsprodukte eingesetzt werden. Es ist aber auch möglich, dass mindestens eine weitere Lasereinrichtung für das Verdampfen und/oder Verbrennen von zumindest einem Teil der Konglomerate, Feststoffpartikel, Stäube, Verdampfungs- und/oder Zersetzungsprodukte verwendet wird.

Des Weiteren besteht die Möglichkeit, dass das Verdampfen und/oder Verbrennen von zumindest einem Teil der Feststoffpartikel, Stäube, Verdampfungs- und/oder Zersetzungsprodukte in einem Bereich zwischen dem Bearbeitungsbereich und dem Abluftsystem, insbesondere einer Absaugvorrichtung, erfolgt. Eine Verunreinigung des Abluftsystems wird dadurch besonders zuverlässig verhindert. Zudem kann der erste und/oder zweite Laserstrahl derart gesteuert werden, dass ausgehend von der ersten und/oder zweiten Lasereinrichtung eine fächerförmige Zone in Richtung des Substrats abgescannt beziehungsweise abgedeckt wird, wobei in der fächerförmigen Zone das Verdampfen und/oder Verbrennen von zumindest einem Teil der Feststoffpartikel, Stäube, Verdampfungs- und/oder Zersetzungsprodukte erfolgt. Auch hierdurch können die Konglomerate, Feststoffpartikel, Stäube, Verdampfungs- und/oder Zersetzungsprodukte besonders effizient aus dem System entfernt werden. Das Substrat kann dabei ein bahn- oder bogenförmiger, Zellstoff enthaltender Packstoff sein.

Die erste Lasereinrichtung kann dabei als abtragende Schneideinrichtung grundsätzlich zum Rillen, Ritzen, Schneiden und/oder Perforieren des Substrats, insbesondere eines bahnförmigen oder bogenförmigen Verpackungsmaterials aus Papier, Karton, Kunststoff oder dergleichen verwendet werden. Im Unterschied zu mechanischen Trennwerkzeugen erlaubt die Lasereinrichtung dabei eine erhöhte Flexibilität sowie die Möglichkeit zur Ausbildung von geometrisch komplexen Biege-, Falt- und Schnittlinien ohne kompliziertem und aufwendigem Werkzeugwechsel.

In weiteren vorteilhaften Ausgestaltungen des erfindungsgemäßen Verfahrens sind die erste und/oder zweite Lasereinrichtung relativ zu einer Laufrichtung des Substrats, z.B. quer oder senkrecht zu der Laufrichtung, bewegbar und/oder umfassen ein steuerbares und/oder regelbares optisches System zum Ablenken und/oder Fokussieren des ersten und/oder zweiten Laserstrahls. Dies erlaubt einerseits besonders hohe Bearbeitungs- und damit Transportgeschwindigkeiten sowie die Ausbildung besonders komplexer Schnitt- und Biegelinien. Andererseits kann der zum Verdampfen und/oder Verbrennen von zumindest einem Teil der Konglomerate, Feststoffpartikel, Stäube, Verdampfungs- und/oder Zersetzungsprodukte vorbestimmte Bereich exakt eingestellt oder auch gegebenenfalls während der Laserbearbeitung des Substrats örtlich verändert beziehungsweise verschoben werden. Somit kann der zum Verdampfen und/oder Verbrennen bestimmte Wirkbereich jederzeit an mögliche Veränderungen, zum Beispiel eine Veränderung der Laufgeschwindigkeit des Substrats, angepasst werden. Die erste und/oder zweite Lasereinrichtung kann aber auch ortsfest im Bereich des Substrats angeordnet sein. Zudem kann der erste und/oder zweite Laserstrahl in mindestens einer Bestrahlungsrichtung fixiert sein.

In weiteren vorteilhaften Ausgestaltungen des erfindungsgemäßen Verfahrens wird der zumindest den Teilbereich des Bearbeitungsbereichs durchströmende Luftstrom mittels mindestens einer im Bereichs des Bearbeitungsbereichs angeordneten Absaugvorrichtung und/oder durch mindestens einen im Bereich des Bearbeitungsbereichs angeordneten Luftstromerzeuger, wie zum Beispiel ein Gebläse, erzeugt. Durch die Absaugvorrichtung und/oder den Luftstromerzeugen ist gewährleistet, dass die durch die Laserablation entstehenden Abgase, Konglomerate, Feststoffpartikel, Stäube, Verdampfungs- und/oder Zersetzungsprodukte_zuverlässig aus dem Bearbeitungsbereich entfernt werden.

Ein zweiter Aspekt der Erfindung betrifft eine Vorrichtung zur Bearbeitung eines Substrats, insbesondere eines Verpackungsmaterials aus Papier, Karton, Kunststoff oder dergleichen oder eines Verbundstoffs umfassend das Substrat, umfassend wenigstens eine erste Lasereinrichtung und wenigstens eine Vorrichtung zur Erzeugung eines Luftstroms in zumindest einem Teilbereich eines Bearbeitungsbereichs des Substrats zum zumindest teilweisen Entfernen von durch eine Laserstrahlbearbeitung des Substrats erzeugten Konglomeraten, Feststoffpartikeln, Stäuben, Verdampfungs- und/oder Zersetzungsprodukten aus zumindest diesem Teilbereich des Bearbeitungsbereichs. Dabei ist die erste Lasereinrichtung derart ausgebildet ist, dass wenigstens ein von der ersten Lasereinrichtung erzeugter erster Laserstrahl ein Verdampfen und/oder Verbrennen von zumindest einem Teil der Konglomerate, Feststoffpartikel, Stäube, Verdampfungs- und/oder Zersetzungsprodukte bewirkt und/oder die Vorrichtung umfasst eine zweite Lasereinrichtung umfasst, die derart ausgebildet ist, dass wenigstens ein von der zweiten Lasereinrichtung erzeugter zweiter Laserstrahl ein Verdampfen und/oder Verbrennen von zumindest einem Teil der Konglomerate, Feststoffpartikel, Stäube, Verdampfungs- und/oder Zersetzungsprodukte bewirkt. Durch das erfindungsgemäße Verdampfen und/oder Verbrennen von zumindest einem Teil der Feststoffpartikel, Stäube, Verdampfungs- und/oder Zersetzungsprodukte wird deren Menge im System signifikant verringert. Dadurch werden vorteilhafterweise Verunreinigungen von vorhandenen Abluftsystemen zuverlässig verhindert beziehungsweise minimiert. Dabei kann die erste Lasereinrichtung sowohl zur Bearbeitung des Substrats als auch zum Verdampfen und/oder Verbrennen von zumindest einem Teil der Konglomerate, Feststoffpartikel, Stäube, Verdampfungs- und/oder Zersetzungsprodukte eingesetzt werden. Es ist aber auch möglich, dass mindestens eine weitere Lasereinrichtung für das Verdampfen und/oder Verbrennen von zumindest einem Teil der Konglomerate, Feststoffpartikel, Stäube, Verdampfungs- und/oder Zersetzungsprodukte verwendet wird. Das Substrat kann dabei ein bahn- oder bogenförmiger, Zellstoff enthaltender Packstoff sein.

Die erste Lasereinrichtung kann dabei als abtragende Schneideinrichtung grundsätzlich zum Rillen, Ritzen, Schneiden und/oder Perforieren des bahnförmigen Packstoffs verwendet werden. Im Unterschied zu mechanischen Trennwerkzeugen erlaubt die Lasereinrichtung dabei eine erhöhte Flexibilität sowie die Möglichkeit zur Ausbildung von geometrisch komplexen Biege- und Schnittlinien ohne komplizierten und aufwändigen Werkzeugwechsel. Dabei kann grundsätzlich vorgesehen sein, dass die erste Lasereinrichtung mehrere Laserquellen, beispielsweise Laserdioden, umfasst. Ebenso können mehrere gleich oder unterschiedlich ausgebildete Lasereinrichtungen vorgesehen sein, um beispielsweise ein sogenanntes Laserarray auszubilden. Entsprechendes gilt für die zweite Lasereinrichtung, die zum Verdampfen und/oder Verbrennen von zumindest einem Teil der Konglomerate, Feststoffpartikel, Stäube, Verdampfungs- und/oder Zersetzungsprodukte verwendet wird.

In Abhängigkeit des Substrats und der durchzuführenden Bearbeitung hat es sich bei der Herstellung von Verpackungen aus Karton als vorteilhaft gezeigt, wenn die erste und/oder zweite Lasereinrichtung wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W umfasst. Hierdurch wird eine besonders schnelle und zuverlässige Bearbeitung des Substrats, insbesondere eines bahn- oder bogenförmigen Packstoffs mittels der ersten Lasereinrichtung ermöglicht. UV-Laser und IR-Laser erzeugen Strahlung in unterschiedlichen Wellenlängenbereichen, wodurch optimale Bearbeitungsergebnisse für unterschiedliche Substrate und Packstoffe sichergestellt werden können. Indem der Laser gepulst, also beispielsweise im Nano-, Piko-, Femto- oder Attosekundenbereich betreibbar ist, können hohe Spitzenintensitäten mit sehr kurzer Dauer erzeugt werden, wodurch ein besonders präziser Materialabtrag des Substrats bzw. Packstoffs ermöglicht ist. Je nach verwendetem Substrat oder Packstoff hat es sich als vorteilhaft gezeigt, wenn die Leistung des Lasers über 1 W liegt und beispielsweise im Bereich von 5 Watt bis 10000 Watt gewählt ist. Entsprechendes gilt für das Verdampfen und/oder Verbrennen von zumindest einem Teil der Konglomerate, Feststoffpartikel, Stäube, Verdampfungs- und/oder Zersetzungsprodukte.

In einer weiteren vorteilhaften Ausgestaltung der Erfindung ist vorgesehen, dass die erste und/oder zweite Lasereinrichtung relativ zu einer Transportrichtung des Substrats bewegbar ist und/oder dass die erste und/oder zweite Lasereinrichtung ein steuerbares und/oder regelbares optisches System zum Ablenken und/oder Fokussieren ihres ersten und/oder zweiten Laserstrahls umfasst. Dies erlaubt besonders hohe Bearbeitungs- und damit Transportgeschwindigkeiten sowie die Ausbildung besonders komplexer Schnitt- und Biegelinien. Zudem kann der zum Verdampfen und/oder Verbrennen von zumindest einem Teil der Konglomerate, Feststoffpartikel, Stäube, Verdampfungs- und/oder Zersetzungsprodukte vorbestimmte Bereich exakt eingestellt oder auch gegebenenfalls während der Laserbearbeitung des Substrats örtlich verändert beziehungsweise verschoben werden. Somit kann der zum Verdampfen und/oder Verbrennen bestimmte Wirkbereich jederzeit an mögliche Veränderungen, zum Beispiel ... angepasst werden. Die erste und/oder zweite Lasereinrichtung kann aber auch ortsfest im Bereich des Substrats angeordnet sein. Zudem kann der erste und/oder zweite Laserstrahl in mindestens einer Bestrahlungsrichtung fixiert sein.

In weiteren vorteilhaften Ausgestaltungen der erfindungsgemäßen Vorrichtung umfasst die Vorrichtung zur Erzeugung des zumindest den die Konglomerate, Feststoffpartikel, Stäube, Verdampfungs- und/oder Zersetzungsprodukte enthaltenden Teilbereichs des Bearbeitungsbereichs durchströmenden Luftstroms mindestens eine im Bereich des Bearbeitungsbereichs angeordnete Absaugvorrichtung und/oder mindestens einen in dem Bereich des Bearbeitungsbereichs angeordneten Luftstromerzeuger, insbesondere ein Gebläse. Die Absaugvorrichtung kann dabei zudem eine Filtervorrichtung zur Rückhaltung der Reste an nicht-verdampften und/oder nichtverbrannten Feststoffpartikeln, Stäuben, Verdampfungs- und/oder Zersetzungsprodukten umfassen. Durch die Absaugvorrichtung beziehungsweise durch den Luftstromerzeuger ist gewährleistet, dass ein konstanter Luftstrom zumindest den relevanten Teilbereich des Bearbeitungsbereichs durch- beziehungsweise überströmt, sodass es zu einem kontinuierlichen Abtransport der durch die Laserablation entstehenden Konglomerate, Feststoffpartikel, Stäube, Verdampfungs- und/oder Zersetzungsprodukte aus dem Bearbeitungsbereich der Vorrichtung kommt. Der Luftstromerzeuger kann dabei mindestens einen ersten Luftführungskanal umfassen, wobei mindestens eine Öffnung des ersten Luftführungskanals in Richtung des Bearbeitungsbereichs des Substrats ausgerichtet ist. Durch die Ausgestaltung des ersten Luftführungskanals ist es möglich, einen in der Richtung definierten und kontinuierlichen Luftstrom in Richtung des Bearbeitungsbereichs des Substrats zu leiten.

In weiteren vorteilhaften Ausgestaltungen der erfindungsgemäßen Vorrichtung sind die erste und/oder zweite Lasereinrichtung derart angeordnet oder ausgerichtet, dass das Verdampfen und/oder Verbrennen von zumindest einem Teil der Konglomerate, Feststoffpartikel, Stäube, Verdampfungs- und/oder Zersetzungsprodukte in einem Bereich zwischen dem Bearbeitungsbereich und der Absaugvorrichtung erfolgt. Eine Verunreinigung des Abluftsystems wird dadurch besonders zuverlässig verhindert. Zudem kann der erste und/oder zweite Laserstrahl mittels mindestens einer Steuereinrichtung derart gesteuert werden, dass ausgehend von der ersten und/oder zweiten Lasereinrichtung eine fächerförmige Zone in Richtung des Substrats abgescannt beziehungsweise abgedeckt wird, wobei in der fächerförmigen Zone das Verdampfen und/oder Verbrennen von zumindest einem Teil der Konglomerate, Feststoffpartikel, Stäube, Verdampfungs- und/oder Zersetzungsprodukte erfolgt. Auch hierdurch können die Konglomerate, Feststoffpartikel, Stäube, Verdampfungs- und/oder Zersetzungsprodukte besonders effizient aus dem System entfernt werden.

In einer weiteren vorteilhaften Ausgestaltung der erfindungsgemäßen Vorrichtung sind die Absaugvorrichtung in Laufrichtung des Substrats stromabwärts und der Luftstromerzeuger in Laufrichtung des Substrats stromaufwärts, oder umgekehrt, angeordnet. Durch eine derartige Anordnung ist gewährleistet, dass ein kontinuierlicher, erwärmter Luftstrom in den Bearbeitungsbereich des Substrats geleitet wird und zugleich die entstehenden Abgase, Konglomerate, Feststoffpartikel, Stäube, Verdampfungs- und/oder Zersetzungsprodukte zuverlässig aus dem Bearbeitungsbereich entfernt werden.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Darstellung einer erfindungsgemäßen Vorrichtung zur Bearbeitung eines Substrats gemäß einem ersten Ausführungsbeispiel;
- Fig. 2: eine schematische Darstellung einer erfindungsgemäßen Vorrichtung zur Bearbeitung eines Substrats gemäß einem zweiten Ausführungsbeispiel; und
- Fig. 3: eine schematische Darstellung eines Teilbereichs einer erfindungsgemäßen Vorrichtung zur Bearbeitung eines Substrats gemäß einem dritten Ausführungsbeispiel.

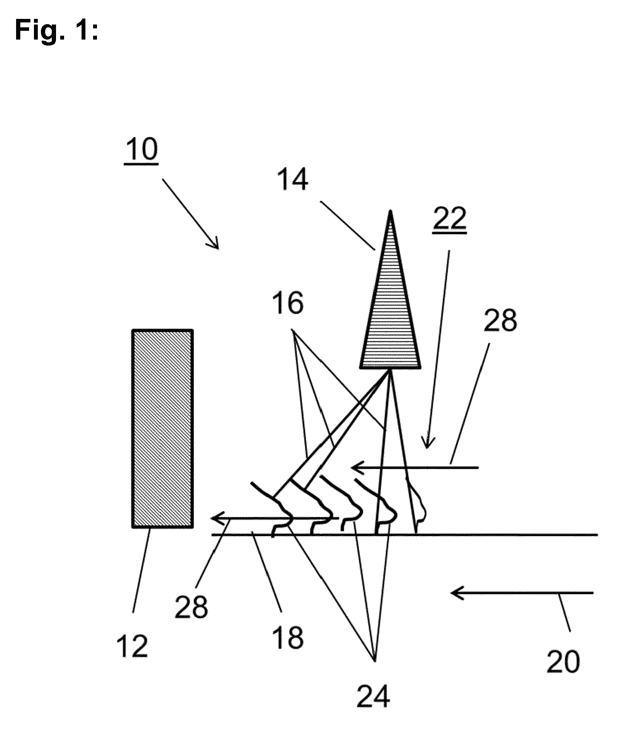

Fig. 1 zeigt eine schematische Darstellung einer erfindungsgemäßen Vorrichtung 10 zur Bearbeitung eines Substrats 18 mittels einer ersten Lasereinrichtung 14. Über die Lasereinrichtung 14 wird mindestens ein erster Laserstrahl 16 erzeugt und auf das Substrat 18 gelenkt. Bei dem Substrat 18 handelt es sich gemäß dem Ausführungsbeispiel um einen bahnförmigen, Zellstoff enthaltenden Packstoff, nämlich ein Verpackungsmaterial aus Karton. Das bahnförmige Substrat 18 kann dabei von einer Rolle oder als Einzelbahnen beziehungsweise Bogenbereitgestellt werden. Zudem kann das Substrat 18 bedruckt oder unbedruckt sein und besteht im vorliegenden Ausführungsbeispiel aus Karton mit einer Grammatur von etwa 150 g/m²m², wobei grundsätzlich auch andere Materialien wie Graukarton oder Vollpappe beziehungsweise Papiersorten mit Grammaturen zwischen 40 g/m² und 1000 g/m², insbesondere zwischen 120 g/m² und 250 g/m² vorgesehen sein können. Auch Kunststoffmaterialien können verwendet werden. Die Vorrichtung 10 umfasst dabei eine Vorrichtung zur Erzeugung eines Luftstroms 28 in zumindest einem Teilbereich eines Bearbeitungsbereichs 22 des Substrats 18. Durch den Luftstrom 28 erfolgt ein zumindest teilweises Entfernen von durch eine Laserstrahlbearbeitung beziehungsweise Laserablation des Substrats 18 erzeugten Konglomerat, Feststoffpartikeln, Stäuben, Verdampfungs- und/oder Zersetzungsprodukten 24 aus zumindest diesem Teilbereich des Bearbeitungsbereichs 22. In dem dargestellten Ausführungsbeispiel handelt es sich bei der Vorrichtung zur Erzeugung des Luftstroms 28 um eine im Bereich des Bearbeitungsbereichs 22 angeordnete Absaugvorrichtung 12. Die Absaugvorrichtung 12 ist in dem dargestellten Ausführungsbeispiel in einer Laufrichtung 20 des Substrats 18 stromabwärts angeordnet. Die Absaugvorrichtung 12 ist dabei derart dimensioniert, dass ein regelmäßiger und genügend großer Luftstrom 28 entsteht.

Des Weiteren erkennt man, dass die die erste Lasereinrichtung 14 derart ausgebildet ist, dass wenigstens ein von der ersten Lasereinrichtung 14 erzeugter erster Laserstrahl 16 auch ein Verdampfen und/oder Verbrennen von zumindest einem Teil der Konglomerate, Feststoffpartikel, Stäube, Verdampfungs- und/oder Zersetzungsprodukte 24 bewirkt. Dabei wird der erste Laserstrahl 16 über ein regelbares optisches System (nicht gezeigt) entsprechend abgelenkt und fokussiert, so dass einerseits besonders komplexe Schnitt- und Rilllinien im Substrat 18 erzeugbar sind und andererseits das Verdampfen und/oder Verbrennen von zumindest einem Teil der Konglomerate, Feststoffpartikel, Stäube, Verdampfungs- und/oder Zersetzungsprodukte 24 bewirkt wird. Man erkennt, dass die erste Lasereinrichtung 14 derart angeordnet oder ausgerichtet ist, dass das Verdampfen und/oder Verbrennen von zumindest einem Teil der Konglomerate, Feststoffpartikel, Stäube, Verdampfungs- und/oder Zersetzungsprodukte 24 in einem Bereich zwischen dem Bearbeitungsbereich 22 und der Absaugvorrichtung 12 erfolgt. Eine Verunreinigung des Abluftsystems wird dadurch besonders zuverlässig verhindert.

Die erste Lasereinrichtung 14 umfasst im gezeigten Ausführungsbeispiel einen im Picosekundenbereich gepulst betreibbaren CO₂-Laser mit einer Leistung von 50 W. Die erste Lasereinrichtung 14 ist zudem relativ zur Transportrichtung 20 des bahnförmigen Substrats 18 bewegbar.

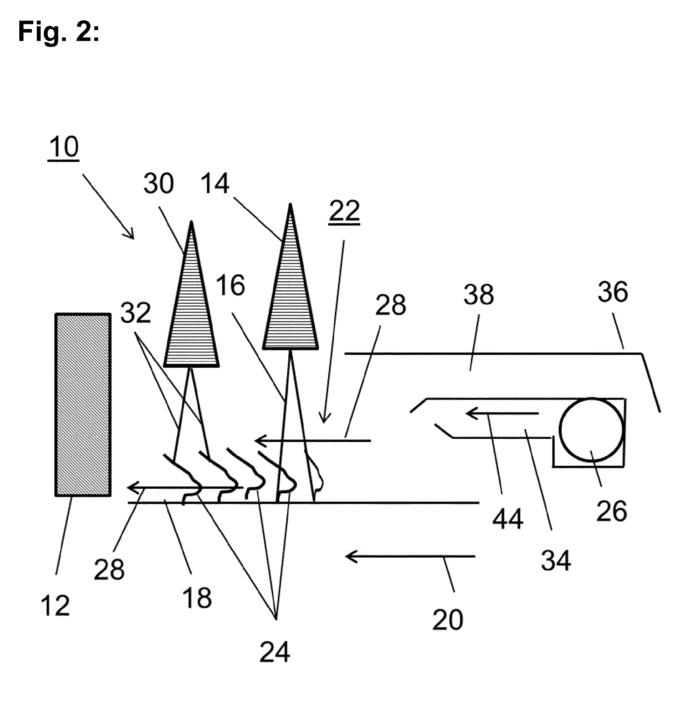

Fig. 2 zeigt eine schematische Darstellung einer erfindungsgemäßen Vorrichtung 10 zur Bearbeitung des Substrats 18 gemäß einem zweiten Ausführungsbeispiel. Der grundsätzliche Aufbau der Vorrichtung 10 ist bereits aus der vorhergehenden Beschreibung des ersten Ausführungsbeispiels bekannt. Im Unterschied zum ersten Ausführungsbeispiel umfasst die in Fig. 2 gezeigte Vorrichtung 10 zudem einen im Bereich des Bearbeitungsbereichs 22 angeordneten Luftstromerzeuger 26 zur Erzeugung eines Luftstroms 44. Bei dem dargestellten Luftstromerzeuger 26 handelt es sich um ein Gebläse. Zudem umfasst der Luftstromerzeuger 26 einen ersten Luftführungskanal 34, der eine Öffnung in Richtung des Bearbeitungsbereichs 22 des Substrats aufweist. Des Weiteren erkennt man, dass zwischen einem Gehäuse 34 des Luftstromerzeugers 26 und einer Abdeckung 36 der Vorrichtung 10 ein zweiter Luftführungskanal 38 ausgebildet ist. Über den zweiten Luftführungskanal 38 kann eine zusätzliche Zufuhr eines Luftstroms erfolgen.

Im weiteren Unterschied zu dem ersten Ausführungsbeispiel umfasst die Vorrichtung gemäß dem zweiten Ausführungsbeispiel eine zweite Lasereinrichtung 30 zur Erzeugung mindestens eines zweiten Laserstrahls 32. Man erkennt, dass die zweite Lasereinrichtung in einem Bereich zwischen der ersten Laservorrichtung 14 beziehungsweise dem Bearbeitungsbereich 22 und der Absaugvorrichtung 12 angeordnet ist. Die mittels des Luftstroms 28 in Richtung der Absaugvorrichtung 12 transportierten Konglomerate, Feststoffpartikel, Stäube, Verdampfungs- und/oder Zersetzungsprodukte 24 werden durch den Laserstrahl 32 erfasst und entsprechend verdampft und/oder verbrannt. Somit wird eine Verunreinigung der Absaugvorrichtung 12 durch die durch den Laserabtrag des Substrats 18 entstandenen Konglomerate, Feststoffpartikel, Stäube, Verdampfungs- und/oder Zersetzungsprodukte 24 zuverlässig minimiert beziehungsweise verhindert. Die zweite Lasereinrichtung 30 umfasst im gezeigten Ausführungsbeispiel ebenfalls einen im Picosekundenbereich gepulst betreibbaren CO₂-Laser mit einer Leistung von 50 W.

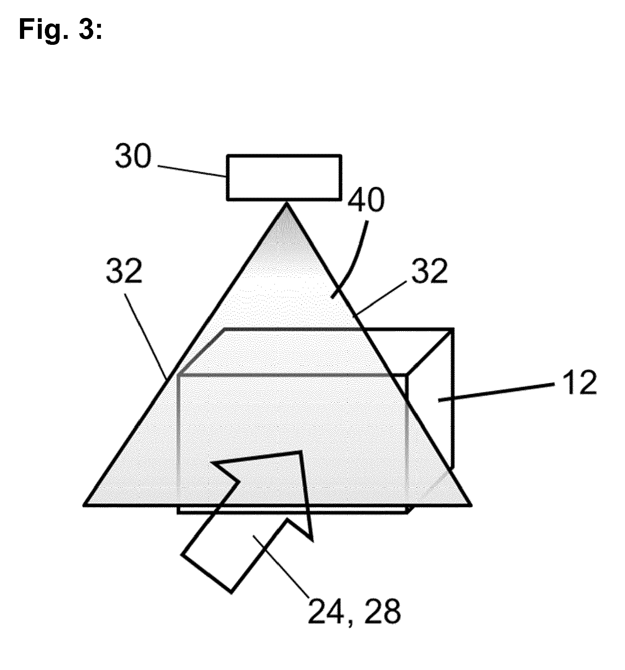

Fig. 3 zeigt eine schematische Darstellung einen Teilbereich einer Vorrichtung zur Bearbeitung eines Substrats 18 gemäß einem dritten Ausführungsbeispiel. Man erkennt, dass der Luftstrom 28 mit den Feststoffpartikeln, Stäuben, Verdampfungs- und/oder Zersetzungsprodukten 24 vor Eintritt in die Absaugvorrichtung 12 einen fächerartigen Scan- oder Überdeckungsbereich 40 des Laserstrahls 32 passiert. Der zweite Laserstrahl 32 wird dabei mittels mindestens einer Steuereinrichtung (nicht dargestellt) derart gesteuert, dass ausgehend von der zweiten Lasereinrichtung 30 die fächerförmige Zone 40 in Richtung des Substrats 18 abgescannt wird, wobei in der Zone 40 das Verdampfen und/oder Verbrennen von zumindest einem Teil der Feststoffpartikel, Stäube, Verdampfungs- und/oder Zersetzungsprodukte 24 erfolgt. Hierdurch können die Konglomerate, Feststoffpartikel, Stäube, Verdampfungs- und/oder Zersetzungsprodukte 24 besonders effizient aus dem System entfernt werden.

Die vorliegende Erfindung umfasst auch mit dem erfindungsgemäßen Verfahren oder der erfindungsgemäßen Vorrichtung hergestellte Zuschnitte für Verpackungen, insbesondere Faltschachteln aus Karton.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

## Patentansprüche

1. Verfahren zur Bearbeitung eines Substrats (18), insbesondere eines Verpackungsmaterials aus Papier, Karton, Kunststoff oder dergleichen, oder eines Verbundstoffs umfassend das Substrat, mittels wenigstens einer ersten Lasereinrichtung (14), umfassend zumindest die folgenden Schritte:
- Steuern und Ausrichten von zumindest einem mittels der ersten Lasereinrichtung (14) erzeugten ersten Laserstrahls (16) zur Bearbeitung des Substrats (18) innerhalb mindestens eines Bearbeitungsbereichs (22);
- Erzeugen eines Luftstroms (28) in zumindest einem Teilbereich des Bearbeitungsbereichs (22) zum zumindest teilweisen Entfernen von durch die Laserstrahlbearbeitung erzeugten Konglomeraten, Feststoffpartikel, Stäuben, Verdampfungs- und/oder Zersetzungsprodukten (24) aus zumindest diesem Teilbereich des Bearbeitungsbereichs (22); und
- Verdampfen und/oder Verbrennen von zumindest einem Teil der Konglomerate, Feststoffpartikel, Stäube, Verdampfungs- und/oder Zersetzungsprodukte (24) mittels des durch die erste Lasereinrichtung (14) erzeugten ersten Laserstrahls (16) und/oder mittels mindestens einem durch eine weitere, zweite Lasereinrichtung (30) erzeugten zweiten Laserstrahl (32).

2. Verfahren nach Anspruch 1,
**dadurch gekennzeichnet, dass**
mittels des ersten Laserstrahls (16) ein Schneiden und/oder Ritzen und/oder Rillen und/oder Perforieren des Substrats (18) durchgeführt wird.

3. Verfahren nach Anspruch 1 oder 2,
**dadurch gekennzeichnet, dass**
die erste und/oder zweite Lasereinrichtung (14, 30) relativ zu einer Laufrichtung (20) des Substrats (18) bewegbar ist und/oder dass die erste und/oder zweite Lasereinrichtung (14, 30) ein steuerbares und/oder regelbares optisches System zum Ablenken und/oder Fokussieren ihres ersten und/oder zweiten Laserstrahls (16, 32) umfasst.

4. Verfahren nach einem der vorhergehenden Ansprüche,
**dadurch gekennzeichnet, dass**
der zumindest den Teilbereich des Bearbeitungsbereichs (22) durchströmende Luftstrom (28) mittels mindestens einer im Bereich des Bearbeitungsbereichs (22) angeordneten Absaugvorrichtung (12) und/oder durch mindestens einen im Bereich des Bearbeitungsbereichs (22) angeordneten Luftstromerzeuger (26) erzeugt wird.

5. Verfahren nach Anspruch 4,
**dadurch gekennzeichnet, dass**
das Verdampfen und/oder Verbrennen von zumindest einem Teil der Konglomerate, Feststoffpartikel, Stäube, Verdampfungs- und/oder Zersetzungsprodukte (24) in einem Bereich zwischen dem Bearbeitungsbereich (22) und der Absaugvorrichtung (12) erfolgt.

6. Verfahren nach einem der vorhergehenden Ansprüche,
**dadurch gekennzeichnet, dass**
das der erste und/oder zweite Laserstrahl (16, 32) derart gesteuert wird, dass ausgehend von der ersten und/oder zweiten Lasereinrichtung (14, 30) eine fächerförmige Zone (40) in Richtung des Substrats (18) abgescannt wird, wobei in der Zone (40) das Verdampfen und/oder Verbrennen von zumindest einem Teil der Konglomerate, Feststoffpartikel, Stäube, Verdampfungs- und/oder Zersetzungsprodukte (24) erfolgt.

7. Verfahren nach einem der vorhergehenden Ansprüche,
**dadurch gekennzeichnet, dass**
das Substrat (18) ein bahn- oder bogenförmiger Zellstoff enthaltender Packstoff ist.

8. Vorrichtung zur Bearbeitung eines Substrats (18), insbesondere eines Verpackungsmaterials aus Papier, Karton, Kunststoff oder dergleichen, oder eines Verbundstoffs umfassend das Substrat, umfassend wenigstens eine erste Lasereinrichtung (14) und wenigstens eine Vorrichtung zur Erzeugung eines Luftstroms (28) in zumindest einem Teilbereich eines Bearbeitungsbereichs (22) des Substrats (18) zum zumindest teilweisen Entfernen von durch eine Laserstrahlbearbeitung des Substrats (18) erzeugten Konglomerate , Feststoffpartikel, Stäuben, Verdampfungs- und/oder Zersetzungsprodukten (24) aus zumindest diesem Teilbereich des Bearbeitungsbereichs (22) des Substrats (18),
**dadurch gekennzeichnet, dass**
die erste Lasereinrichtung (14) derart ausgebildet ist, dass wenigstens ein von der ersten Lasereinrichtung (14) erzeugter erster Laserstrahl (16) ein Verdampfen und/oder Verbrennen von zumindest einem Teil der Konglomerate, Feststoffpartikel, Stäube, Verdampfungs- und/oder Zersetzungsprodukte (24) bewirkt und/oder die Vorrichtung (10) eine zweite Lasereinrichtung (30) umfasst, die derart ausgebildet ist, dass wenigstens ein von der zweiten Lasereinrichtung (30) erzeugter zweiter Laserstrahl (32) ein Verdampfen und/oder Verbrennen von zumindest einem Teil der Konglomerate, Feststoffpartikel, Stäube, Verdampfungs- und/oder Zersetzungsprodukte (24) bewirkt.

9. Vorrichtung nach Anspruch 8,
**dadurch gekennzeichnet, dass**
die erste und/oder zweite Lasereinrichtung (14, 30) wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W, insbesondere im Bereich von 5 Watt bis 10000 Watt, umfasst.

10. Vorrichtung nach Anspruch 8 oder 9,
**dadurch gekennzeichnet, dass**
die erste und/oder zweite Lasereinrichtung (14, 30) relativ zu einer Laufrichtung (20) des Substrats (18) bewegbar sind und/oder dass die erste und/oder zweite Lasereinrichtung (14, 30) ein steuerbares und/oder regelbares optisches System zum Ablenken und/oder Fokussieren ihres ersten und/oder zweiten Laserstrahls (16, 32) umfasst.

11. Vorrichtung nach einem der Ansprüche 8 bis 10,
**dadurch gekennzeichnet, dass**
die Vorrichtung (10) zur Erzeugung des zumindest den die Konglomerate, Feststoffpartikel, Stäube, Verdampfungs- und/oder Zersetzungsprodukte (24) enthaltenden Teilbereichs des Bearbeitungsbereichs (22) durchströmenden Luftstroms (28) mindestens eine im Bereich des Bearbeitungsbereichs (22) angeordnete Absaugvorrichtung (12) und/oder mindestens einen im Bereich des Bearbeitungsbereichs (22) angeordneten Luftstromerzeuger (26) umfasst.

12. Vorrichtung nach Anspruch 11,
**dadurch gekennzeichnet, dass**
die Absaugvorrichtung (12) eine Filtervorrichtung zur Rückhaltung nichtverdampfter und/oder nicht-verbrannter Konglomerate, Feststoffpartikel, Stäube, Verdampfungs- und/oder Zersetzungsprodukte umfasst.

13. Vorrichtung nach einem der Ansprüche 11 oder 12,
**dadurch gekennzeichnet, dass**
die erste und/oder zweite Lasereinrichtung (14, 30) derart angeordnet oder ausgerichtet sind, dass das Verdampfen und/oder Verbrennen von zumindest einem Teil der Konglomerate, Feststoffpartikel, Stäube, Verdampfungs- und/oder Zersetzungsprodukte (24) in einem Bereich zwischen dem Bearbeitungsbereich (22) und der Absaugvorrichtung (12) erfolgt.

14. Vorrichtung nach einem der Ansprüche 11 bis 13,
**dadurch gekennzeichnet, dass**
der das der erste und/oder zweite Laserstrahl (16, 32) mittels mindestens einer Steuereinrichtung derart gesteuert wird, dass ausgehend von der ersten und/oder zweiten Lasereinrichtung (14, 30) eine fächerförmige Zone (40) in Richtung des Substrats (18) abgescannt wird, wobei in der Zone (40) das Verdampfen und/oder Verbrennen von zumindest einem Teil der Konglomerate, Feststoffpartikel, Stäube, Verdampfungs- und/oder Zersetzungsprodukte (24) erfolgt.

15. Vorrichtung nach einem der Ansprüche 10 bis 13,
**dadurch gekennzeichnet, dass**
die Absaugvorrichtung (12) in Laufrichtung (20) des Substrats (18) stromabwärts und der Luftstromerzeuger (26) in Laufrichtung (20) des Substrats (18) stromaufwärts, oder umgekehrt, angeordnet sind.
